# EUROPEAN PATENT APPLICATION

(11) **EP 4 552 470 A1**
(43) Date of publication of application: **14.05.2025**
(21) Application number: 23209275.9
(22) Date of filing: 10.11.2023
(51) Int. Cl.: A01D 69/06

(54) **POWER TRANSMISSION APPLICABLE IN A COMBINE HARVESTER**

(71) Applicant: CNH Industrial Belgium N.V., 8210 Zedelgem (BE)
(72) Inventor: De Lathauwer, Tom, 8210 Zedelgem (BE); Vanderstichele, Michiel, 8210 Zedelgem (BE); Vancoillie, Ruben, 8210 Zedelgem (BE); Duquesne, Frank R.G., 8210 Zedelgem (BE)
(74) Representative: CNH Industrial IP Department

(57) **Abstract**

The combine harvester (1) comprises a cleaning system including a sieve assembly coupled to a drive mechanism for actuating a fore-aft shaking movement of one or more components of the sieve assembly. The combine further comprises a tailings return system including a transversal tailings return auger (9) and an inclined tailings elevating auger (10). The combine includes a power transmission for driving said tailings return augers, the transmission comprising a first belt transmission (25) and a first and second gear transmission, configured to transmit power from a transversal drive shaft (31) of the harvester to the two tailings return augers. The first gear transmission is a planar gear transmission. According to an embodiment, the output axle (38) of the first gear transmission also drives a belt transmission (50) configured to drive the fore-aft shaking movement of the sieve assembly and the rotation of a clean grain auger (12) of the harvester.

## Description

### Field of the Invention

The present invention is related to combine harvesters, in particular to a power transmission applicable in a cleaning system of a combine harvester.

### State of the art.

Combine harvesters comprise a cleaning system including a sieve assembly for separating grain kernels from crop residue material. The sieve assembly usually comprises a grain pan and one or more sieves mounted on a support frame. An actuating mechanism subjects the grain pan and the sieves to a fore-aft shaking movement relative to the support frame, possibly with a sideshaking movement superposed thereon.

Driving the fore-aft shaking movements of the sieve assembly is done by transmitting power from a power shaft driven directly or indirectly by a power source within the combine harvester such as the main engine or a hydraulic motor, to an output shaft coupled through an eccentric drive arm to a sieve or a grain pan of the cleaning system. In a number of presently known combines, the power shaft is not directly coupled to the sieve assembly, but it is coupled thereto via a power transmission that also drives a tailings return system of the combine. The tailings return system comprises a set of tailings return augers configured to move tailings, i.e. insufficiently separated crop residue, back to the cleaning system or to the threshing section of the harvester. Presently known power transmissions for driving the tailings system are mostly belt transmissions, which require more space than is often available in the closely packed interior of modern harvesters. Belt transmissions are also vulnerable to the negative impact of dirt and crop residue accumulating in said closely packed interior.

### Summary of the invention

The invention is related to a combine harvester as described in the appended claims. The combine harvester comprises a cleaning system including a sieve assembly. The components of the sieve assembly such as a grain pan and one or more sieves are coupled to a drive mechanism for actuating a fore-aft shaking movement of one or more of said components. The combine further comprises a tailings return system including a transversal tailings return auger (i.e. transversal to the fore-aft direction of the harvester, said fore-aft direction being the longitudinal direction of the harvester) and an inclined tailings elevating auger at one lateral side of the cleaning system. The combine includes a power transmission for driving said tailings return augers, the transmission comprising a first belt transmission and a first and second gear transmission, configured to transmit power from a transversal drive shaft of the harvester to the two (transversal and inclined) tailings return augers. The first gear transmission is a planar gear transmission. The gear transmissions may be mounted in a common gearbox or in separate gearboxes. According to an embodiment, the output axle of the first gear transmission also drives a belt transmission configured to drive the fore-aft shaking movement of the sieve assembly and the rotation of a clean grain auger of the harvester.

The gear transmissions enable a more compact drive of the tailings return augers that is also less vulnerable to contamination by dirt and crop residue.

### Brief description of the figures

Figure 1 is a conceptual side view of a combine harvester as known in the prior art.
Figures 2 and 3 illustrate a power transmission in accordance with an embodiment of the invention.
Figure 4 shows in more detail the gearbox included in the power transmission shown in Figures 2 and 3.
Figures 5 and 6 illustrate the gear transmissions included in the gearbox.

### Detailed description of preferred embodiments of the invention

Preferred embodiments will now be described with reference to the drawings. The detailed description is not limiting the scope of the invention, which is defined only by the appended claims.

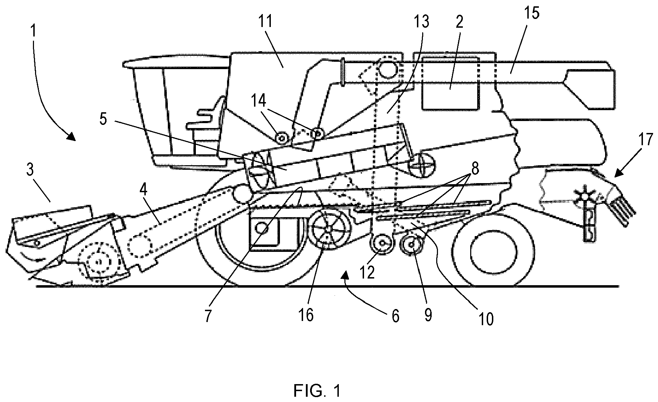

With reference to Figure 1, a combine harvester 1 as presently known in the art includes an engine 2, a header 3 for cutting crops from the field, and for gathering the crops towards the inlet of a feeder 4. The feeder delivers the crops to one or two threshing rotors 5 which separate larger crop material from grains and smaller residue. Longitudinally mounted threshing rotors may be applied as shown in the drawing, but transversely mounted rotors are equally possible.

The cleaning system 6 of the harvester includes a sieve assembly comprising a grain pan 7 and a plurality of sieves 8 for separating grains from the smaller residue. Insufficiently separated crop material, also called tailings, is transported back to the cleaning system or the threshing rotors by a transversally arranged tailings return auger 9 and an inclined tailings elevating auger 10. Fully separated grains are collected in a grain tank 11 through the combined action of a clean grain auger 12 and a grain elevator 13. From the tank 11, the grains may be evacuated from the harvester through further augers 14 at the bottom of the grain tank and through a pivotable spout 15. Small crop residue, also referred to as chaff, is blown towards the rear of the harvester by a cleaning fan 16. Larger crop residue such as crop stalks and leaves is moved to a chopper and spreader assembly 17, where it may be cut into smaller particles and spread out across a wide swath behind the advancing combine.

The present invention is related to a power transmission for driving the transversal tailings return auger 9 (transversal with respect to the fore-aft direction of the harvester) and the inclined tailings elevating auger 10. According to preferred embodiments, the power transmission for driving these augers is incorporated in the larger drive mechanism for driving the fore-aft shaking movements of one or more components of the sieve assembly, such as the grain pan and the sieves.

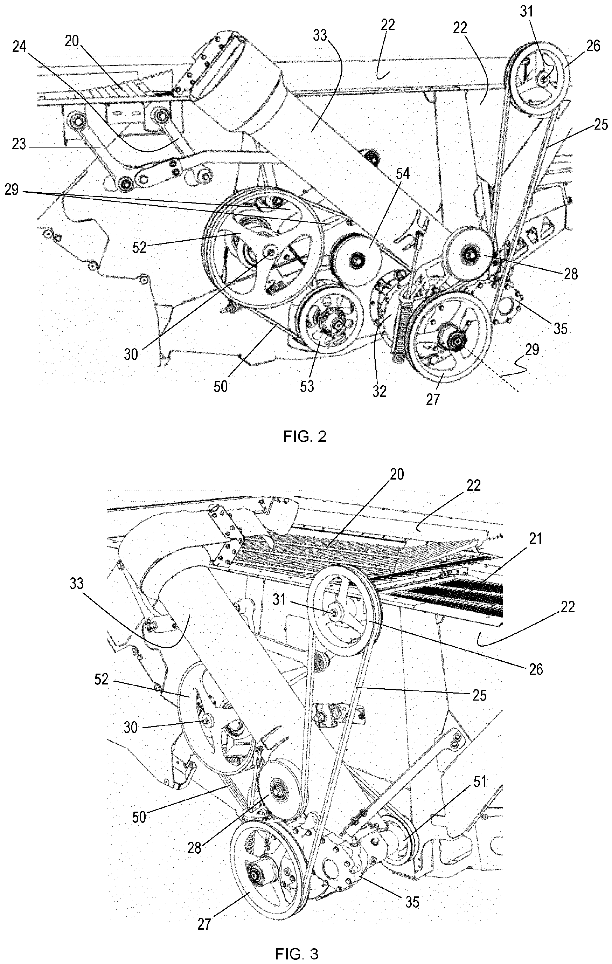

Figures 2 and 3 show two views from different angles, of part of the cleaning system of a combine harvester according to an embodiment of the invention. The views are taken from the left-hand side of the combine with the side doors removed. The grain pan 20 and the upper sieve 21 are arranged between the parallel sidewalls 22 of a support frame mounted on the chassis (not shown) of the harvester. The lower sieve is hidden behind the sidewall at the front of the images. The grain pan 20 and the sieves are suspended from the support frame by a number of rocking arms enabling a fore-aft shaking movement of these components. Two of the rocking arms 23 and 24 are shown in Figure 2, respectively for supporting the grain pan 20 and the upper sieve 21. Additional rocking arms are situated outside the frame of the images and mirrored versions of the rocking arms are present on the opposite side of the support frame. The fore-aft shaking movement is driven by drive arms 29 coupled by eccentric couplings to a drive shaft 30.

A first belt transmission 25 transmits power from a cross-over shaft 31 (not fully shown) via a first pulley 26 to a second pulley 27 that is fixed to the central rotation axle of the transversal tailings return auger located at the bottom of the cleaning section (i.e. auger 9 in Figure 1). The cross-over shaft 31 is driven directly or indirectly by a power source of the combine, such as the main engine or a hydraulic motor. The first belt transmission 25 further includes a tensioner pulley 28. The transversal tailings return auger 9 is rotatable about rotation axis 29. Tailings are delivered by this transversal auger to a transfer housing 32 fixed to the side of the support frame. The housing 32 comprises transfer paddles or similar means for moving tailings to the inlet of the inclined tailings elevating auger 10 housed in the tube 33.

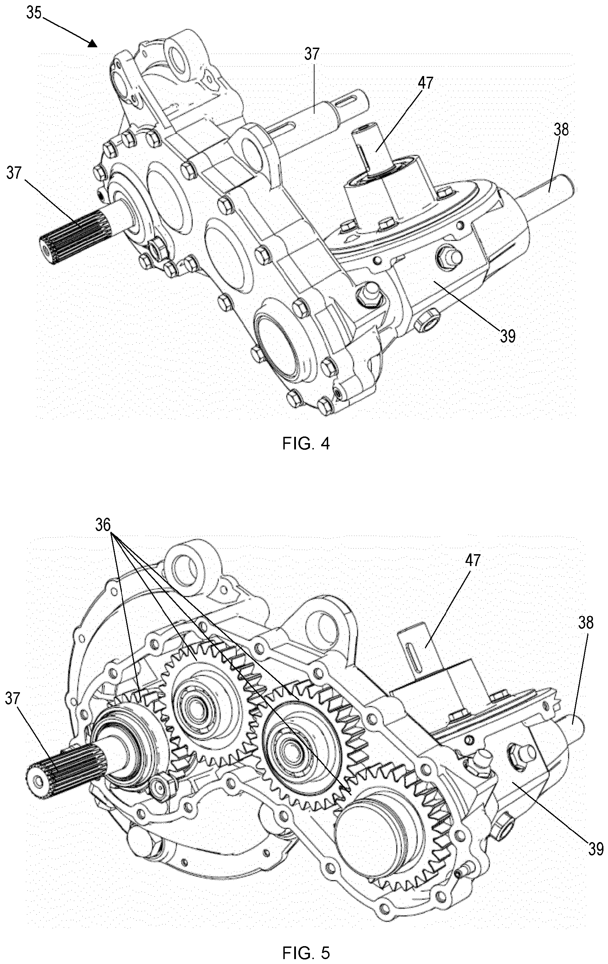

As seen in the figures, a gearbox 35 is mounted between the transfer housing 32 and the second pulley 27 of the first belt transmission 25. The gearbox 35 is fixed by bolt connections to the transfer housing 32. Figures 4 to 6 show the gearbox 35 in more detail. As shown in the view in Figure 5 where the left-hand cover of the gearbox is removed, the gearbox includes a first gear transmission comprising four gears 36. The first gear transmission is a planar gear transmission in the sense that the gears 36 are arranged in a common plane. In other words, the rotation axles of the 4 gears are mutually parallel. The input axle 37 of the first gear transmission is configured to be fixed at one end to the second pulley 27 of the first belt transmission 25 and at the other end to the central rotation axle of the transversal tailings return auger 9. The output axle 38 of the first gear transmission is parallel to the input axle 37. In this particular embodiment, due to the fact that the first gear transmission comprises an even number of gears 36, the rotation direction of the output axle 38 is opposite to the rotation direction of the input axle 37. The significance of this feature will be described later in this text.

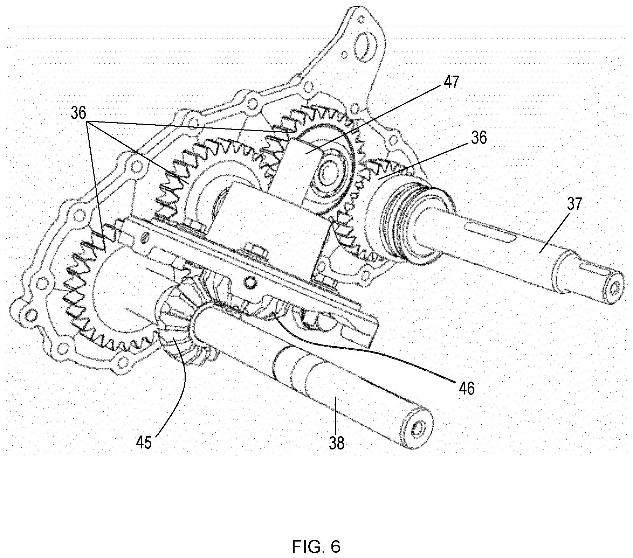

The gearbox 35 further includes a second gear transmission housed in a laterally extending portion 39 of the gearbox housing. As illustrated in Figure 6, the second gear transmission comprises a first bevel gear 45 fixed to the output axle 38 of the first gear transmission and a second bevel gear 46 fixed to the output axle 47 of the second gear transmission. The latter output axle 47 is fixed to the central rotation axle of the inclined tailings elevating auger 10 in the tube 33 (not shown in Figure 6).

The two gear transmissions thereby transmit power from the second pulley 27 of the first belt transmission 25 to the rotation axle of the inclined tailings auger 10 in the tube 33. As a result, the power transmission from the cross-over shaft 31 to the tailings return augers 9 and 10 is more compact compared to presently known arrangements wherein the tailings augers 9 and 10 are driven by an additional belt transmission. The gearbox 35 is also less susceptible to the influence of dust and other debris.

According to the embodiment shown, the gearbox 35 comprises a common housing containing the first and second gear transmissions. It is however not a limiting feature of the invention that the two transmissions are housed in a common housing. They could be housed in two separate housings, i.e. two gearboxes mounted in fixed positions relative to each other.

Also in the embodiment shown and with reference to Figures 2 and 3, the output axle 38 of the first gear transmission extends out of the gearbox housing at the side opposite said first gear transmission. This output axle 38 drives a second belt transmission 50 mounted between the support frame and the gearbox 35 and configured to drive the fore-aft shaking movement of the grain pan 20 and the sieves. The second belt transmission 50 comprises a first pulley 51 (only visible in Figure 3) fixed to the output axle 38 of the first gear transmission, a second pulley 52 fixed to the drive shaft 30 for driving the fore-aft shaking movements of the sieve assembly, and a third pulley 53 for driving the rotation of a clean grain auger (auger 12 in Fig. 1) arranged at the bottom of the cleaning section for moving clean grain to the grain elevator (13 in Fig. 1) installed on the opposite side of the support frame. The second belt transmission 50 further includes a tensioner pulley 54.

The invention is not limited to cleaning systems comprising the second belt transmission 50. The shaft 30 for driving the fore-aft shaking movement could be driven by another drive mechanism. It is however advantageous to apply the second belt transmission 50 in combination with the gear transmissions in the gearbox 35, in particular the planar first gear transmission, as the number of gears in this transmission determines the direction of rotation of the second belt transmission 50, and thereby of the clean grain auger 12. In the particular embodiment shown, the cross-over shaft 31 rotates anticlockwise (as seen from the left side of the combine) as a consequence of its installation and coupling to the combine's power source. By applying an even number of gears 36 in the first gear transmission, the direction of rotation of the pulleys 52,53,54 of the second belt transmission 50 is opposite to the direction of rotation of the pulleys 26,27 of the first belt transmission 25. This means that the clean grain auger 12 now rotates in clockwise direction. In this particular combine, this rotation direction of the clean grain auger is advantageous, because it reduces the negative consequences of a blockage of this auger in terms of possible grain loss or damage to the cleaning fan. When rotating in the clockwise direction, blocked grains are thrown in the direction away from the cleaning fan instead of into the cleaning fan. In a number of harvesters which are in use today, the rotation direction of the clean grain auger 12 is necessarily anticlockwise as a consequence of the applied power transmission including only belt transmissions.

## Claims

1. A combine harvester (1) comprising a grain cleaning system including a support frame and a sieve assembly comprising a number of components including one or more sieves (21) mounted on the support frame by a plurality of rocking arms (23,24) enabling a fore-aft shaking movement of one or more of said components, and further comprising a tailings return system for returning tailings issued from the sieve assembly back to the cleaning system or to a threshing system of the combine harvester, wherein the tailings return system includes a transversal tailings return auger (9) and an inclined tailings elevating auger (10), both augers comprising a central rotation axle, the transversal return auger (9) being configured to feed tailings to the inclined tailings elevating auger (10), the harvester further comprising a power transmission assembly for transmitting power from a transversal drive shaft (31) of the harvester to the transversal tailings return auger (9) and the inclined tailings elevating auger (10), **characterised in that** said power transmission assembly includes:
- a first belt transmission (25) coupling the transversal drive shaft (31) to the transversal tailings return auger (9),
- a first gear transmission having an input axle (37) and an output axle (38), wherein the input axle is integral with or fixed to the central rotation axle of the transversal tailings return auger (9), wherein said first gear transmission is a planar gear transmission,
- a second gear transmission coupling the output axle (38) of the first gear transmission to the central rotation axle of the inclined tailings return auger (10).

2. The combine harvester according to claim 1, wherein the first gear transmission and the second gear transmission are mounted in a common gearbox (35).

3. The combine harvester according to any one of the preceding claims, wherein the first gear transmission comprises an even number of gears (36).

4. The combine harvester according to claim 3, wherein the first gear transmission comprises 4 gears.

5. The combine harvester according to any one of the preceding claims, wherein the second gear transmission comprises two bevel gears (45,46).

6. The combine harvester according to any one of the preceding claims, further comprising a second belt transmission (50) driven by the output axle (38) of the first gear transmission, the second belt transmission (50) being configured to drive said fore-aft shaking movement of one or more components of the sieve assembly.

7. The combine harvester according to claim 6, wherein the second belt transmission (50) is located between the inclined tailings return auger (10) and the support frame.

8. The combine harvester according to claim 6 or 7, wherein the second belt transmission (50) also drives a clean grain auger (12) of the combine harvester.

9. The combine harvester according to claim 8, wherein the first gear transmission comprises an even number of gears (36) so that the rotation direction of the clean grain auger is opposite to the rotation direction of the transversal drive shaft (31) of the harvester.

10. A gearbox (35) comprising a common housing including a first and second gear transmission suitable for use as the first and second gear transmissions in a combine harvester (1) according to any one of the preceding claims.
